# EUROPEAN PATENT APPLICATION

(11) **EP 4 716 313 A1**
(43) Date of publication of application: **25.03.2026**
(21) Application number: 24830802.5
(22) Date of filing: 26.06.2024
(51) Int. Cl.: H04W 52/02

(54) **COMMUNICATION METHOD AND APPARATUS**

(30) Priority: 30.06.2023 CN 202310809292
(71) Applicant: Huawei Technologies Co., Ltd., Shenzhen, Guangdong 518129 (CN)
(72) Inventor: LIU, Chenchen, Shenzhen, Guangdong 518129 (CN); ZHOU, Zhengchun, Chengdu, Sichuan 611756 (CN); QIAN, Bin, Shenzhen, Guangdong 518129 (CN); HUANG, Lei, Shenzhen, Guangdong 518129 (CN)
(74) Representative: Isarpatent
(86) International application number: PCT/CN2024/101545
(87) International publication number: WO 2025/002163

(57) **Abstract**

This application provides a communication method and apparatus. The communication method and apparatus are applied to an ultra-wideband-based wireless personal area network system, including 802.15 series protocols such as the 802.15.4a protocol, the 802.15.4z protocol, or the 802.15.4ab protocol, and further supporting a next-generation Wi-Fi protocol of IEEE 802.11ax, for example, 802.11be, Wi-Fi 7, or an extremely high throughput, and 802.11b. The method includes: A transmitting device transmits a first signal to a receiving device, where the first signal is used to indicate N bits, and a value of each bit is determined based on a magnitude relationship between average energies in two burst intervals; and the receiving device determines to wake up the receiving device based on the first signal. One-bit information is transmitted based on two burst intervals, so that the receiving device can correctly demodulate the first signal, thereby helping effectively wake up the receiving device.

## Description

This application claims priority to Chinese Patent Application No. 202310809292.2, filed with the China National Intellectual Property Administration on June 30, 2023 and entitled "COMMUNICATION METHOD AND APPARATUS", which is incorporated herein by reference in its entirety.

### TECHNICAL FIELD

This application relates to the field of communication technologies, and more specifically, to a communication method and apparatus.

### BACKGROUND

An ultra-wideband (ultra-wideband, UWB) technology is a wireless carrier communication technology, and implements data transmission by transmitting and receiving extremely narrow pulses at a nanosecond level or below a microsecond level. For its widely occupied spectrum range and low radiation spectrum density, the UWB technology has advantages of a strong multi-path resolution capability, low power consumption, high confidentiality, and the like.

Usually, a UWB device (a device that receives or transmits a UWB signal) is in a sleep mode, and the UWB device switches from the sleep mode to a working mode only when a UWB communication mode needs to be used. Therefore, how to enable the UWB device in the sleep mode to switch to the working mode is particularly important.

Currently, the UWB device is mainly woken up by transmitting and receiving a wake-up sequence. However, this manner easily causes the UWB device to be woken up by mistake. Therefore, how to effectively wake up the UWB device is an urgent technical problem to be resolved.

### SUMMARY

This application provides a communication method and apparatus, to effectively wake up a UWB device.

According to a first aspect, a communication method is provided. The method is applied to a UWB system, and the method includes: generating a first signal, where the first signal is used to wake up a receiving device, the first signal is used to indicate N bits, a value of a p^{th} bit in the N bits is determined based on a magnitude relationship between an average energy in a first burst interval and an average energy in a second burst interval, the first burst interval is a previous burst interval of the second burst interval, N is a positive integer, and p is a positive integer less than or equal to N; and transmitting the first signal to the receiving device.

Specifically, the solution in the first aspect may be performed by a transmitting device, or may be performed by a module, a chip, or the like configured to perform a function of the transmitting device. This is not limited. The following uses the transmitting device as an example for description. The transmitting device is a UWB device.

It should be noted that the average energy in the first burst interval is a ratio of a sum of energies in the first burst interval to an interval length of the first burst interval, the average energy in the second burst interval is a ratio of a sum of energies in the second burst interval to an interval length of the second burst interval.

One-bit information is transmitted based on a magnitude relationship between average energies in two burst intervals. When the first signal is interfered, the average energies in the two burst intervals are enhanced or weakened to a same or similar degree, however, the magnitude relationship between the average energies in the two burst intervals is not changed. This helps the receiving device correctly demodulate the first signal, thereby effectively waking up the receiving device.

According to a second aspect, a communication method is provided. The method is applied to a UWB system, and the method includes: receiving a first signal, where the first signal is used to wake up a receiving device, the first signal is used to indicate N bits, a value of a p^{th} bit in the N bits is determined based on a magnitude relationship between an average energy in a first burst interval and an average energy in a second burst interval, the first burst interval is a previous burst interval of the second burst interval, N is a positive integer, and p is a positive integer less than or equal to N; and waking up the receiving device based on the first signal.

Specifically, the solution in the second aspect may be performed by a receiving device, or may be performed by a module, a chip, or the like configured to perform a function of the receiving device. This is not limited. The following uses the receiving device as an example for description. The receiving device is a UWB device.

One-bit information is transmitted based on a magnitude relationship between average energies in two burst intervals. When the first signal is interfered, the average energies in the two burst intervals are enhanced or weakened to a same or similar degree, however, the magnitude relationship between the average energies in the two burst intervals is not changed. The receiving device can correctly demodulate the first signal, thereby effectively waking up the receiving device.

With reference to any one of the solutions in the first aspect and the second aspect, the first burst interval and the second burst interval are located in a same time unit.

In this way, the receiving device can obtain one-bit information in a same time unit.

With reference to any one of the solutions in the first aspect and the second aspect, the first burst interval is adjacent to the second burst interval.

It should be noted that, in this application, there is an energy in only one burst interval in one time unit, that is, the transmitting device transmits a pulse only in one burst interval in one time unit.

In this way, the receiving device can obtain one-bit information as soon as possible.

With reference to any one of the solutions of the first aspect and the second aspect, the first burst interval is located in a first time unit, the second burst interval is located in a second time unit, and the first time unit is a previous time unit of the second time unit.

One-bit information is transmitted based on two time units. This helps improve performance of the first signal in resisting channel interference.

With reference to any one of the solutions in the first aspect and the second aspect, the first time unit is adjacent to the second time unit.

In this way, the receiving device can obtain one-bit information as soon as possible.

With reference to any one of the solutions of the first aspect and the second aspect, the average energy in the first burst interval is higher than the average energy in the second burst interval, and the value of the p^{th} bit is a binary 1.

It may be understood that, when the average energy in the first burst interval is higher than the average energy in the second burst interval, the value of the p^{th} bit may be a binary 0.

In this way, transmission of one-bit information can be implemented.

With reference to any one of the solutions of the first aspect and the second aspect, the first burst interval includes M pulses, and a pulse repetition frequency of transmitting the M pulses is an integer multiple of 62.4 MHz.

In this way, compatibility with an existing standard can be implemented.

With reference to any one of the solutions of the first aspect and the second aspect, the average energy in the first burst interval is lower than the average energy in the second burst interval, and the value of the p^{th} bit is a binary 0.

It may be understood that, when the average energy in the first burst interval is lower than the average energy in the second burst interval, the value of the p^{th} bit may be a binary 1.

In this way, transmission of one-bit information can be implemented.

With reference to any one of the solutions of the first aspect and the second aspect, the second burst interval includes W pulses, and a pulse repetition frequency of transmitting the W pulses is an integer multiple of 62.4 MHz.

In this way, compatibility with an existing standard can be implemented.

With reference to any one of the solutions in the first aspect and the second aspect, a time length of the first burst interval is equal to a time length of the second burst interval.

For example, both the time length of the first burst interval and the time length of the second burst interval are 4 microseconds. In this way, the time length can be consistent with a half of a time length that is of a burst interval and that is specified in an existing standard.

According to a third aspect, a communication apparatus is provided. The communication apparatus may be a transmitting device, or may be a device, a module, or the like configured to perform a function of the transmitting device.

In a possible implementation, the communication apparatus may include modules or units that one-to-one correspond to the methods/operations/steps/actions described in the first aspect. The module or unit may be implemented by a hardware circuit, software, or a combination of a hardware circuit and software.

According to a fourth aspect, a communication apparatus is provided. The communication apparatus may be a receiving device, or may be a device, a module, or the like configured to perform a function of the receiving device.

In a possible implementation, the communication apparatus may include modules or units that one-to-one correspond to the methods/operations/steps/actions described in the second aspect. The module or unit may be implemented by a hardware circuit, software, or a combination of a hardware circuit and software.

According to a fifth aspect, a communication apparatus is provided, including a processor. The processor is configured to enable, by executing a computer program or instructions or via a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory. The memory is configured to store the computer program or the instructions.

In a possible implementation, the communication apparatus further includes a communication interface. The communication interface is configured to input and/or output a signal.

According to a sixth aspect, a communication apparatus is provided, including a logic circuit and an input/output interface. The input/output interface is configured to input and/or output a signal, and the logic circuit is configured to perform the method according to any one of the first aspect and the possible implementations of the first aspect, or the logic circuit is configured to perform the method according to any one of the second aspect and the possible implementations of the second aspect.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided, including instructions. When the instructions are run on a computer, the method according to any one of the first aspect and the possible implementations of the first aspect is performed, or the method according to any one of the second aspect and the possible implementations of the second aspect is performed.

Descriptions of beneficial effects of the third aspect to the eighth aspect may correspond to the descriptions of the beneficial effects of the first aspect.

### BRIEF DESCRIPTION OF DRAWINGS

FIG. 1 is a diagram of a communication system 100 to which an embodiment of this application is applicable;
FIG. 2 is a schematic interaction flowchart of a communication method 200 according to an embodiment of this application;
FIG. 3 is a diagram of a relationship between a burst interval 1 and a burst interval 2 according to an embodiment of this application;
FIG. 4 is a diagram of another relationship between a burst interval 1 and a burst interval 2 according to an embodiment of this application;
FIG. 5 is a block diagram of a communication apparatus 500 according to an embodiment of this application;
FIG. 6 is a block diagram of a communication apparatus 600 according to an embodiment of this application;
FIG. 7 is a block diagram of a communication apparatus 700 according to an embodiment of this application;
FIG. 8 is a block diagram of a communication apparatus 800 according to an embodiment of this application; and
FIG. 9 is a block diagram of a communication apparatus 900 according to an embodiment of this application.

### DESCRIPTION OF EMBODIMENTS

For ease of understanding of embodiments of this application, the following descriptions are provided first.
1. In this application, unless otherwise specified, "a plurality of" means two or more.
2. In this application, unless otherwise specified or there is a logical conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not intended to limit the protection scope of this application. Sequence numbers in this application do not mean execution sequences. Execution sequences of processes should be determined based on functions and internal logic of the processes. For example, in this specification, claims, and accompanying drawings of this application, terms such as "first", "second", "third", "fourth", and various other ordinal number terms (if existent) are intended to distinguish between similar objects, but do not necessarily indicate a specific order or sequence. The data termed in such a way is interchangeable in proper circumstances so that embodiments described herein can be implemented in other orders than the order illustrated or described herein.

In addition, any embodiment or design scheme described as an "example" or "for example" in this application should not be explained as being more preferred or having more advantages than another embodiment or design scheme. Exactly, use of the words such as "example" or "for example" is intended to present a related concept in a specific manner for ease of understanding.

4. Terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

5. In this application, "pre-configuration" may include pre-definition, for example, protocol definition. "Pre-definition" may be implemented by pre-storing corresponding code or a corresponding table in a device, or may be implemented in another manner of indicating related information. A specific implementation of the "pre-definition" is not limited in this application.

6. "Storage" or "store" in this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into a decoder, a processor, or a communication apparatus. A type of the memory may be a storage medium in any form. This is not limited.

7. A "protocol" in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.

8. Arrow or blocks shown by dashed lines in the diagrams of the accompanying drawings of the specification of this application represent optional steps or optional modules.

9. In this application, unless otherwise specified, "/" indicates an "or" relationship between associated objects. For example, A/B may indicate A or B. In this application, "and/or" describes only an association relationship for describing associated objects and indicates that three relationships may exist. For example, A and/or B may indicate the following three cases: Only A exists, both A and B exist, and only B exists, where A and B may be singular or plural.

First, a communication system to which embodiments of this application are applicable is described.

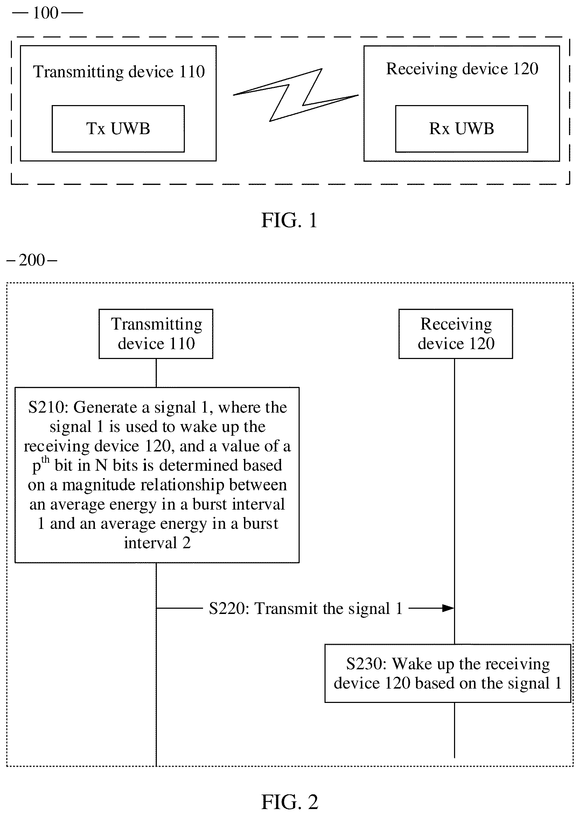

FIG. 1 is a diagram of a communication system 100 to which an embodiment of this application is applicable. As shown in FIG. 1, the communication system 100 includes a transmitting device 110 and a receiving device 120. The transmitting device 110 is a device that transmits a UWB signal, and the receiving device 120 is a device that receives the UWB signal. The transmitting device 110 and the receiving device 120 communicate with each other by using a UWB technology. Both the transmitting device 110 and the receiving device 120 include a UWB signal processing module. For example, the transmitting device 110 includes a UWB signal transmitting module (Tx UWB). The receiving device 120 includes a UWB signal receiving module (Rx UWB). In addition, both the transmitting device 110 and the receiving device 120 may be referred to as UWB devices. For ease of description, the following uses the transmitting device 110 and the receiving device 120 as an example for description.

It should be noted that FIG. 1 is described merely by using an example in which the communication system 100 includes one transmitting device 110 and one receiving device 120. However, the communication system 100 is not limited to including more other devices. For example, the communication system 100 may further include more receiving devices 120.

Specifically, the transmitting device 110 may be a network device, and the receiving device 120 may be a terminal device; or the transmitting device 110 may be a terminal device, and the receiving device 120 may be a network device. For descriptions of the network device and the terminal device, refer to the following descriptions.

The terminal device is a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a device in machine type communication, or may be a cordless phone, a session initiation protocol (session initiation protocol, SIP) phone, a wireless local loop (wireless local loop, WLL) station, a personal digital processing (personal digital assistant, PDA) device, customer premises equipment (customer premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, a drone, a robot, a terminal in device-to-device (device-to-device, D2D), a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid) a wireless terminal in transportation safety (transportation safety), a wireless terminal in a smart city (smart city), a wireless terminal in a smart home (smart home), a terminal device in a communication network evolved after 5G, or the like. This is not limited in this application.

A communication apparatus configured to implement a function of a terminal device may be a terminal device, or may be an apparatus that can support the terminal device in implementing the function, for example, a chip system. The apparatus may be installed in the terminal device or used in cooperation with the terminal device. In this application, the chip system may include a chip, or may include a chip and another discrete component.

The network device is a device having a wireless transceiver function, and is configured to communicate with the terminal device. The network device may be a node in a radio access network (radio access network, RAN), may be referred to as a base station, or may be referred to as a RAN node. The network device may be an evolved NodeB (evolved NodeB, eNB or eNodeB) in long term evolution (long term evolution, LTE), a base station in a 5G network like a gNodeB (gNB), a base station in a public land mobile network (public land mobile network, PLMN) evolved after 5G, a broadband network gateway (broadband network gateway, BNG), an aggregation switch, a 3rd generation partnership project (the 3rd generation partnership project, 3GPP) access device, or the like.

The RAN may be configured as a RAN, an open radio access network (open radio access network, O-RAN), a cloud access network (cloud radio access network, C-RAN), or the like defined in a 3GPP protocol. The network device 110 may further include base stations in various forms, for example, a macro base station, a micro base station (also referred to as a small cell), a relay station, a transmission point (transmitting and receiving point, TRP), a transmitting point (transmitting point, TP), a mobile switching center, a device-to-device (device-to-device, D2D), a device that functions as a base station function in vehicle-to-everything (vehicle-to-everything, V2X) communication and machine-to-machine (machine-to-machine, M2M) communication, and a network device in a non-terrestrial network (non-terrestrial network, NTN). This is not specifically limited.

The network device may further include a network element or module that implements a part of functions of a base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

A communication apparatus configured to implement a function of a network device may be a network device, or may be an apparatus that can support the network device in implementing the function, for example, a chip system. The apparatus may be installed in the network device or used in cooperation with the network device. In embodiments of this application, the chip system may include a chip, or may include a chip and another discrete component.

The communication system 100 may alternatively be the following systems: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G system, a 6G system, or an NTN system, for example, an inter-satellite communication system or a satellite communication system. The satellite communication system includes a satellite base station and a terminal device. The satellite base station provides a communication service for the terminal device. The satellite base station may also communicate with a terrestrial base station. A satellite may serve as a base station, or may serve as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The communication system 100 may alternatively be a terrestrial cellular communication system, a high altitude platform (high altitude platform station, HAPS) communication system, a V2X system, an integrated access and backhaul (integrated access and backhaul, IAB) system, a reconfigurable intelligent surface (reconfigurable intelligent surface, RIS) communication system, or the like. This is not limited.

In addition, the communication system 100 may further include a star topology or a peer-to-peer topology. Data communication between a central control node and one or more other devices in the star topology is also applicable to communication between different devices in the peer-to-peer topology.

It can be learned from content in the background, currently, a UWB device is woken up by transmitting and receiving a wake-up sequence. This manner easily causes the UWB device to be woken up by mistake. Specifically, a wakeup burst (wakeup burst, WUB) used to wake up the UWB device is generated in an on-off keying (on-off keying, OOK) modulation manner, that is, one-bit information is transmitted based on whether there is an energy. When a transmitting device transmits a binary 0 (that is, there is no energy) to a receiving device, the receiving device may receive a binary 1 due to impact such as channel interference. This may cause the receiving device to be woken up by mistake. Therefore, how to effectively wake up the UWB device is an urgent technical problem to be resolved currently.

In view of this, this application provides a communication method and apparatus, to effectively wake up a UWB device.

The following describes the communication method in embodiments of this application with reference to the accompanying drawings.

FIG. 2 is a schematic interaction flowchart of a communication method 200 according to an embodiment of this application. A procedure of the method in FIG. 2 may be performed by a transmitting device 110 and a receiving device 120, or may be performed by modules and/or components (for example, chips or integrated circuits) that are installed in the transmitting device 110 and the receiving device 120 and that have corresponding functions. This is not limited. The following uses the transmitting device 110 and the receiving device 120 as an example for description. As shown in FIG. 2, the method 200 includes the following steps.

S210: The transmitting device 110 generates a signal 1 (for example, a first signal), where the signal 1 is used to wake up the receiving device 120.

Specifically, the signal 1 is used to indicate N bits, and a value of each bit is determined based on a magnitude relationship between average energies in two burst intervals. For example, a value of a p^{th} bit in the N bits is determined based on a magnitude relationship between an average energy in a burst interval 1 (for example, a first burst interval) and an average energy in a burst interval 2 (for example, a second burst interval). The burst interval 1 is a previous burst interval of the burst interval 2. N is a positive integer greater than 1, and p is a positive integer less than or equal to N.

It should be noted that the average energy in the burst interval 1 is a ratio of a sum of energies in the burst interval 1 to an interval length (or a time length) of the burst interval 1, and the average energy in the burst interval 2 is a ratio of a sum of energies in the burst interval 2 to an interval length (or a time length) of the burst interval 2.

For the value of the p^{th} bit being determined based on the magnitude relationship between the average energy in the burst interval 1 and the average energy in the burst interval 2, refer to the following descriptions.

In an example, the average energy in the burst interval 1 is higher than the average energy in the burst interval 2, and the value of the p^{th} bit is a binary 1. In this way, transmission of one-bit information can be implemented.

In an example, the average energy in the burst interval 1 is lower than the average energy in the burst interval 2, and the value of the p^{th} bit is a binary 1. In this way, transmission of one-bit information can be implemented.

In an example, the average energy in the burst interval 1 is higher than the average energy in the burst interval 2, and the value of the p^{th} bit is a binary 0. In this way, transmission of one-bit information can be implemented.

In an example, the average energy in the burst interval 1 is lower than the average energy in the burst interval 2, and the value of the p^{th} bit is a binary 0. In this way, transmission of one-bit information can be implemented.

When the average energy in the burst interval 1 is higher than the average energy in the burst interval 2, it may indicate that the burst interval 1 includes M (which is a positive integer) pulses, and a pulse repetition frequency of transmitting the M pulses is an integer multiple of 62.4 MHz. This can be compatible with an existing standard. When the average energy in the burst interval 2 is higher than the average energy in the burst interval 1, it may indicate that the burst interval 2 includes W (which is a positive integer) pulses, and a pulse repetition frequency of transmitting the W pulses is an integer multiple of 62.4 MHz. This can be compatible with an existing standard.

When the average energy in the burst interval 1 is higher than the average energy in the burst interval 2, whether the average energy in the burst interval 2 is 0 is not limited in this application. When the average energy in the burst interval 2 is higher than the average energy in the burst interval 1, whether the average energy in the burst interval 1 is 0 is not limited in this application.

In conclusion, one-bit information is transmitted based on a magnitude relationship between average energies in two burst intervals. This helps reduce a probability of waking up a UWB device by mistake.

S220: The transmitting device 110 transmits the signal 1 to the receiving device 120.

Correspondingly, the receiving device 120 receives the signal 1.

S230: The receiving device 120 wakes up the receiving device 120 based on the signal 1.

Specifically, the receiving device 120 may determine the value of each bit based on the magnitude relationship between the average energies in the two burst intervals, to obtain the N bits, and determine, based on the N bits, whether to wake up the receiving device 120.

In conclusion, one-bit information is transmitted based on a magnitude relationship between average energies in two burst intervals. When the signal 1 is interfered, the average energies in the two burst intervals are enhanced or weakened to a same or similar degree, however, the magnitude relationship between the average energies in the two burst intervals is not changed. This helps the receiving device correctly demodulate the signal 1, thereby effectively waking up the receiving device.

It should be noted that the N bits may include identification information of the receiving device 120, that is, the receiving device 120 may determine whether the identification information included in the N bits matches an identifier of the receiving device, and determine to wake up the receiving device 120 if the identification information matches the identifier of the receiving device, or skip waking up the receiving device 120 if the identification information does not match the identifier of the receiving device.

In addition, the N bits may further include synchronization (synchronization) information, used to trigger the receiving device 120 to start to receive the signal 1. When the N bits include a bit indicating the synchronization information and a bit indicating the identification information, the bit indicating the synchronization information is before the bit indicating the identification information.

It should be further noted that, for specific descriptions of the signal 1, refer to an existing standard. Details are not described herein.

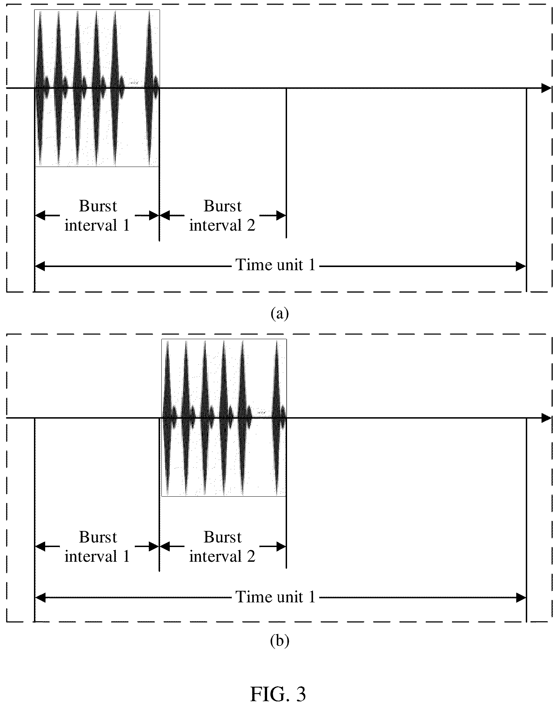

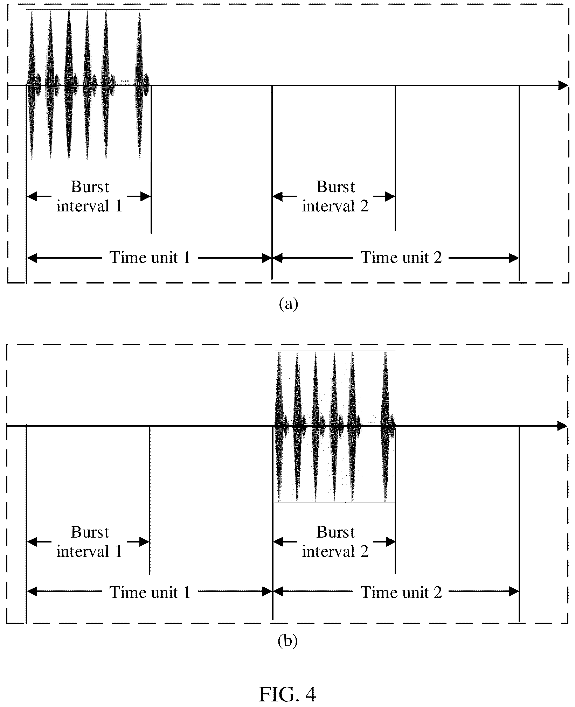

The following describes a relationship between the burst interval 1 and the burst interval 2 with reference to FIG. 3 and FIG. 4.

FIG. 3 is a diagram of a relationship between the burst interval 1 and the burst interval 2 according to an embodiment of this application. As shown in FIG. 3, the burst interval 1 and the burst interval 2 are located in a same time unit. One time unit may be one millisecond, a plurality of milliseconds, or the like. This is not limited. As shown in (a) in FIG. 3, there is an energy in the burst interval 1, and there is no energy in the burst interval 2. This represents a binary 1, and transmission of one-bit information can be completed. As shown in (b) in FIG. 3, there is no energy in the burst interval 1, and there is an energy in the burst interval 2. This represents a binary 0, and transmission of one-bit information can be completed.

Specifically, when the burst interval 1 and the burst interval 2 are located in the same time unit, the receiving device may obtain the one-bit information in the same time unit. When the burst interval 1 and the burst interval 2 are two adjacent burst intervals, the receiving device may obtain the one-bit information as soon as possible.

In the content shown in FIG. 3, this embodiment of this application is described by using an example in which the burst interval 1 and the burst interval 2 are two adjacent burst intervals. However, a scenario in which there is at least one other burst interval between the burst interval 1 and the burst interval 2 is not limited.

FIG. 4 is a diagram of another relationship between the burst interval 1 and the burst interval 2 according to an embodiment of this application. As shown in FIG. 4, the burst interval 1 is located in a time unit 1, and the burst interval 2 is located in a time unit 2. As shown in (a) in FIG. 4, there is an energy in the burst interval 1, and there is no energy in the burst interval 2. This represents a binary 1, and transmission of one-bit information can be completed. As shown in (b) in FIG. 4, there is no energy in the burst interval 1, and there is an energy in the burst interval 2. This represents a binary 0, and transmission of one-bit information can be completed.

When the burst interval 1 and the burst interval 2 are respectively located in two different time units, that is, one-bit information is transmitted based on two time units, this helps improve performance of the signal 1 in resisting channel interference. When the time unit 1 and the time unit 2 are two adjacent time units, the receiving device may obtain the one-bit information as soon as possible.

In the content shown in FIG. 4, this embodiment of this application is described by using an example in which the time unit 1 and the time unit 2 are two adjacent time units. However, an application scenario in which there is at least one other time unit between the time unit 1 and the time unit 2 is not limited.

It should be noted that, when the burst interval 1 and the burst interval 2 are respectively located in the time unit 1 and the time unit 2, the time unit 1 and the time unit 2 each may further include another burst interval, that is, the time unit 1 may include at least two burst intervals, and the time unit 2 may include at least two burst intervals. This is not limited.

In the foregoing descriptions, the time length of the burst interval 1 may be the same as or different from the time length of the burst interval 2. This is not limited. For example, both the time length of the burst interval 1 and the time length of the burst interval 2 may be 4 microseconds. In this way, the time length can be consistent with a half of a time length that is of a burst interval and that is specified in an existing standard.

It should be noted that, in this application, there is an energy in only one burst interval in one time unit, that is, the transmitting device transmits a pulse in one burst interval in one time unit. It should be noted that the content shown in FIG. 3 and the content shown in FIG. 4 are merely used as examples for understanding, and are not used as a final limitation.

Finally, apparatus embodiments in embodiments of this application are described.

To implement various functions in the method provided in this application, both the transmitting device 110 and the receiving device 120 may include a hardware structure and/or a software module, to implement the foregoing functions in a form of the hardware structure, the software module, or a combination of the hardware structure and the software module. Whether a function in the foregoing functions is implemented by the hardware structure, the software module, or the combination of the hardware structure and the software module depends on particular applications and design constraints of the technical solutions.

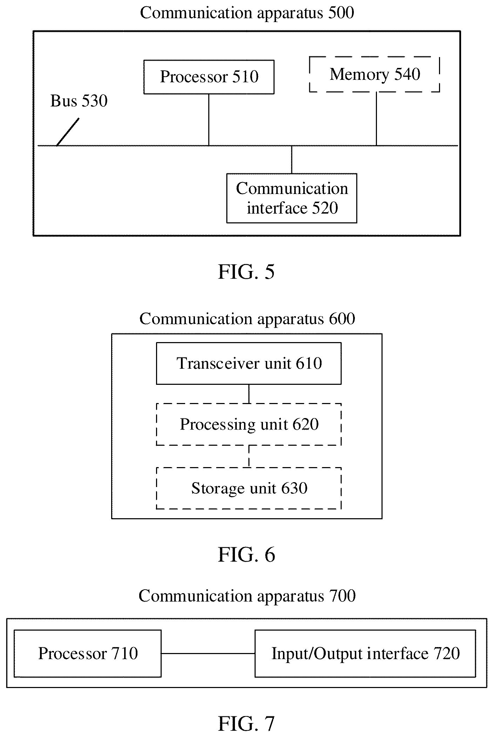

FIG. 5 is a block diagram of a communication apparatus 500 according to an embodiment of this application. The communication apparatus 500 includes a processor 510 and a communication interface 520. The processor 510 and the communication interface 520 may be connected to each other through a bus 530. The communication apparatus 500 may be the transmitting device 110, or may be the receiving device 120.

Optionally, the communication apparatus 500 may further include a memory 540. The memory 540 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 540 is configured to store related instructions and data.

The processor 510 may be one or more central processing units (central processing units, CPUs). When the processor 510 is one CPU, the CPU may be a single-core CPU or a multicore CPU.

When the communication apparatus 500 is the transmitting device 110, for example, the processor 510 is configured to perform the following operations: generating a signal 1; and transmitting the signal 1 to the receiving device 120.

When the communication apparatus 500 is the receiving device 120, for example, the processor 510 is configured to perform the following operations: receiving a signal 1; and waking up the receiving device 120 based on the signal 1.

The foregoing content is merely used as an example for description. When the communication apparatus 500 is the transmitting device 110 or the receiving device 120, the communication apparatus 500 is responsible for performing the methods or steps related to the transmitting device 110 or the receiving device 120 in the foregoing method embodiments.

The foregoing descriptions are merely an example for description. For specific content, refer to the content shown in the foregoing method embodiments. For implementation of each operation in FIG. 5, refer to corresponding descriptions of the method embodiments shown in FIG. 2 to FIG. 4.

FIG. 6 is a block diagram of a communication apparatus 600 according to an embodiment of this application. The communication apparatus 600 may be the transmitting device 110 or the receiving device 120, or may be a chip or a module in the transmitting device 110 or the receiving device 120, and is configured to implement the method in the foregoing embodiments. The communication apparatus 600 includes a transceiver unit 610 and a processing unit 620. The following describes the transceiver unit 610 and the processing unit 620 by using examples.

The transceiver unit 610 may include a transmitting unit and a receiving unit. The transmitting unit is configured to perform a transmitting action of the communication apparatus, and the receiving unit is configured to perform a receiving action of the communication apparatus. For ease of description, in embodiments of this application, the transmitting unit and the receiving unit are combined into one transceiver unit. This is described herein once for all, and details are not described below again.

When the communication apparatus 600 is the receiving device 120, for example, the transceiver unit 610 is configured to receive a signal 1, and the processing unit 620 is configured to wake up the receiving device 120 based on the signal 1.

When the communication apparatus 600 is the transmitting device 110, for example, the transceiver unit 610 is configured to transmit a signal 1, and the processing unit 620 is configured to perform content related to steps such as processing and coordination of the transmitting device 110, for example, is configured to generate the signal 1.

The foregoing content is merely used as an example for description. When the communication apparatus 600 is the transmitting device 110 or the receiving device 120, the communication apparatus 600 is responsible for performing the methods or steps related to the transmitting device 110 or the receiving device 120 in the foregoing method embodiments.

Optionally, the communication apparatus 600 further includes a storage unit 630. The storage unit 630 is configured to store a program or code used to perform the foregoing method.

The apparatus embodiments shown in FIG. 5 and FIG. 6 are used to implement the content described in FIG. 2 to FIG. 4. For specific execution steps and methods of the apparatuses shown in FIG. 5 and FIG. 6, refer to the content described in the foregoing method embodiments.

FIG. 7 is a block diagram of a communication apparatus 700 according to an embodiment of this application. The communication apparatus 700 is configured to implement a function of the transmitting device 110 or the receiving device 120. The communication apparatus 700 may be a chip in the transmitting device 110 or receiving device 120.

The communication apparatus 700 includes an input/output interface 720 and a processor 710. The input/output interface 720 may be an input/output circuit. The processor 710 may be a signal processor, a chip, or another integrated circuit that can implement the method in this application. The input/output interface 720 is configured to input or output a signal or data.

For example, when the communication apparatus 700 is the transmitting device 110, the input/output interface 720 is configured to transmit a signal 1. The processor 710 is configured to generate the signal 1. The processor 710 is further configured to perform a part or all of steps of any method provided in this application.

For example, when the communication apparatus 700 is the receiving device 120, the input/output interface 720 is configured to receive a signal 1. The processor 710 is configured to perform a part or all of steps of any method provided in this application.

In a possible implementation, the processor 710 executes instructions stored in a memory, to implement a function implemented by a network device or a terminal device.

Optionally, the communication apparatus 700 further includes the memory.

Optionally, the processor and the memory are integrated together.

Optionally, the memory is outside the communication apparatus 700.

In a possible implementation, the processor 710 may be a logic circuit, and the processor 710 inputs/outputs a message or signaling through the input/output interface 720. The logic circuit may be a signal processor, a chip, or another integrated circuit that can implement the method in embodiments of this application.

The foregoing descriptions of the communication apparatus 700 are merely examples for description. The communication apparatus 700 can be configured to perform the method in the foregoing embodiments. For specific content, refer to the descriptions in the foregoing method embodiments. Details are not described herein again.

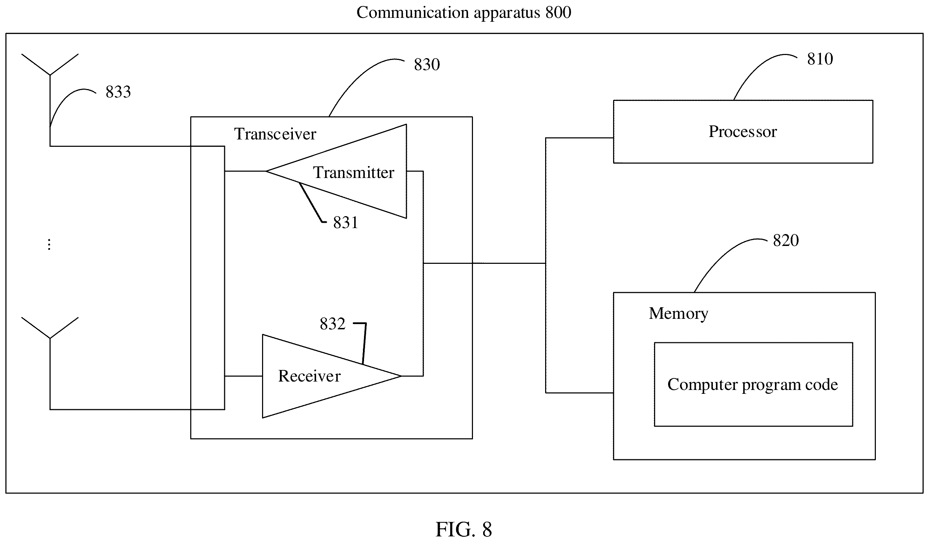

FIG. 8 is a block diagram of a communication apparatus 800 according to an embodiment of this application. The communication apparatus 800 may be a network device or a chip. The communication apparatus 800 may be configured to perform an operation performed by a network device in the method embodiments shown in FIG. 2 to FIG. 4.

When the communication apparatus 800 is the network device (which may be the transmitting device 110 or the receiving device 120), for example, a base station, FIG. 8 is a simplified diagram of a structure of the base station. The network device includes a module 810, a module 820, and a module 830. The module 810 is mainly configured to: perform baseband processing, control the network device, and the like. The module 810 is usually a control center of the network device, may be usually referred to as a processor, and is configured to control the network device to perform a processing operation on a network device side in the foregoing method embodiments. The module 820 is mainly configured to store computer program code and data. The module 830 is mainly configured to: receive or send a radio frequency signal, and perform conversion between the radio frequency signal and a baseband signal. The module 830 may be usually referred to as a transceiver module, a transceiver device, a transceiver circuit, a transceiver, or the like. The transceiver module of the module 830 may also be referred to as a transceiver device, a transceiver, or the like, and includes an antenna 833 and a radio frequency circuit (not shown in FIG. 8). The radio frequency circuit is mainly configured to perform radio frequency processing. Optionally, in the module 830, a component configured to implement a receiving function may be considered as a receiver, and a component configured to implement a transmitting function may be considered as a transmitter. In other words, the module 830 includes a receiver 832 and a transmitter 831. The receiver may also be referred to as a receiving module, a receiver device, a receiver circuit, or the like, and the transmitter may be referred to as a transmitting module, a transmitter device, a transmitter circuit, or the like.

The module 810 and the module 820 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, the plurality of boards may share one or more processors, or the plurality of boards share one or more memories, or the plurality of boards share one or more processors at the same time.

For example, in an implementation, the transceiver module of the module 830 is configured to perform a receiving/sending-related process performed by the network device in the embodiments shown in FIG. 2 and FIG. 4. The processor of the module 810 is configured to perform a processing-related process performed by the network device in the embodiments shown in FIG. 2 to FIG. 4.

In another implementation, the processor of the module 810 is configured to perform a processing-related process performed by a communication device in the embodiments shown in FIG. 2 to FIG. 4.

In another implementation, the transceiver module of the module 830 is configured to perform a sending/receiving-related process performed by a communication device in the embodiments shown in FIG. 2 to FIG. 4.

It should be understood that FIG. 8 is merely an example rather than a limitation. The network device including the processor, the memory, and the transceiver may not depend on the structures shown in FIG. 5 to FIG. 7.

When the communication apparatus 800 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

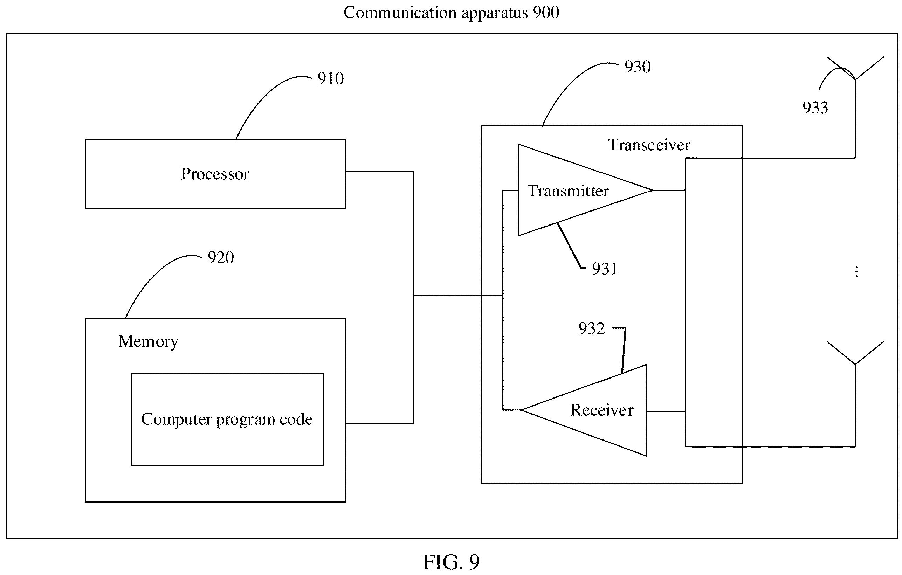

FIG. 9 is a block diagram of a communication apparatus 900 according to an embodiment of this application. The communication apparatus 900 may be a terminal device, a processor of the terminal device, or a chip. The communication apparatus 900 may be configured to perform an operation performed by a terminal device in the foregoing method embodiments.

When the communication apparatus 900 is the terminal device (which may be the transmitting device 110 or the receiving device 120), FIG. 9 is a simplified diagram of a structure of the terminal device. As shown in FIG. 9, the terminal device includes a processor, a memory, and a transceiver. The memory may store computer program code. The transceiver includes a transmitter 931, a receiver 932, a radio frequency circuit (not shown in FIG. 9), an antenna 933, and an input/output apparatus (not shown in FIG. 9).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, the processor performs baseband processing on to-be-sent data, and outputs a baseband signal to the radio frequency circuit. After performing radio frequency processing on the baseband signal, the radio frequency circuit sends a radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 9 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have transmitting and receiving functions may be considered as a transceiver module of the terminal device, and the processor that has a processing function may be considered as a processing module of the terminal device.

As shown in FIG. 9, the terminal device includes a processor 910, a memory 920, and a transceiver 930. The processor 910 may also be referred to as a processing unit, a processing board, a processing module, a processing apparatus, or the like. The transceiver 930 may also be referred to as a transceiver unit, a transceiver device, a transceiver apparatus, or the like.

Optionally, in the transceiver 930, a component configured to implement a receiving function may be considered as a receiving module, and a component configured to implement a sending function may be considered as a sending module. In other words, the transceiver 930 includes a receiver and a transmitter. The transceiver may also be sometimes referred to as a transceiver device, a transceiver module, a transceiver circuit, or the like. The receiver may also be sometimes referred to as a receiver device, a receiving module, a receiver circuit, or the like. The transmitter may also be sometimes referred to as a transmitter device, a transmitting module, a transmitter circuit, or the like.

For example, in an implementation, the processor 910 is configured to perform a processing action of the terminal device in the embodiments shown in FIG. 2 to FIG. 4, and the transceiver 930 is configured to perform receiving and sending actions on a terminal device side in FIG. 2 to FIG. 4.

For example, in an implementation, the processor 910 is configured to perform a processing action on a terminal device side in the embodiments shown in FIG. 2 to FIG. 4, and the transceiver 930 is configured to perform receiving and sending actions on the terminal device side in FIG. 2 to FIG. 4.

It should be understood that FIG. 9 is merely an example rather than a limitation. The foregoing receiving device including the transceiver module and the processing module may not depend on the structures shown in FIG. 5 to FIG. 7.

When the communication apparatus 900 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor, configured to invoke, from a memory, and run instructions stored in the memory, for a communication device in which the chip is installed to perform the method in the foregoing examples.

This application further provides another chip, including an input interface, an output interface, and a processor. The input interface, the output interface, and the processor are connected to each other through an internal connection path, the processor is configured to execute code in a memory, and when the code is executed, the processor is configured to perform the method in the foregoing examples. Optionally, the chip further includes the memory. The memory is configured to store a computer program or code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, the disclosed system, apparatus, and method may be implemented in other manners. For example, the described apparatus embodiments are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units. To be specific, the components may be located at one location, or may be distributed on a plurality of network units. A part or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions in embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, wherein the method is applied to an ultra-wideband UWB system, and the method comprises:
generating a first signal, wherein the first signal is used to wake up a receiving device, the first signal is used to indicate N bits, a value of a p^{th} bit in the N bits is determined based on a magnitude relationship between an average energy in a first burst interval and an average energy in a second burst interval, the first burst interval is a previous burst interval of the second burst interval, N is a positive integer, and p is a positive integer less than or equal to N; and
sending the first signal to the receiving device.

2. The method according to claim 1, wherein the first burst interval and the second burst interval are located in a same time unit.

3. The method according to claim 2, wherein the first burst interval is adjacent to the second burst interval.

4. The method according to claim 1, wherein the first burst interval is located in a first time unit, the second burst interval is located in a second time unit, and the first time unit is a previous time unit of the second time unit.

5. The method according to claim 4, wherein the first time unit is adjacent to the second time unit.

6. The method according to any one of claims 1 to 5, wherein the average energy in the first burst interval is higher than the average energy in the second burst interval, and the value of the p^{th} bit is a binary 1.

7. The method according to claim 6, wherein the first burst interval comprises M pulses, a pulse repetition frequency of transmitting the M pulses is an integer multiple of 62.4 MHz, and M is a positive integer.

8. The method according to any one of claims 1 to 7, wherein the average energy in the first burst interval is lower than the average energy in the second burst interval, and the value of the p^{th} bit is a binary 0.

9. The method according to claim 8, wherein the second burst interval comprises W pulses, a pulse repetition frequency of transmitting the W pulses is an integer multiple of 62.4 MHz, and W is a positive integer.

10. The method according to any one of claims 1 to 9, wherein a time length of the first burst interval is equal to a time length of the second burst interval.

11. A communication method, wherein the method is applied to a UWB system, and the method comprises:
receiving a first signal, wherein the first signal is used to wake up a receiving device, the first signal is used to indicate N bits, a value of a p^{th} bit in the N bits is determined based on a magnitude relationship between an average energy in a first burst interval and an average energy in a second burst interval, the first burst interval is a previous burst interval of the second burst interval, N is a positive integer, and p is a positive integer less than or equal to N; and
waking up the receiving device based on the first signal.

12. The method according to claim 11, wherein the first burst interval and the second burst interval are located in a same time unit.

13. The method according to claim 12, wherein the first burst interval is adjacent to the second burst interval.

14. The method according to claim 11, wherein the first burst interval is located in a first time unit, the second burst interval is located in a second time unit, and the first time unit is a previous time unit of the second time unit.

15. The method according to claim 14, wherein the first time unit is adjacent to the second time unit.

16. The method according to any one of claims 11 to 15, wherein the average energy in the first burst interval is higher than the average energy in the second burst interval, and the value of the p^{th} bit is a binary 1.

17. The method according to claim 16, wherein the first burst interval comprises M pulses, a pulse repetition frequency of transmitting the M pulses is an integer multiple of 62.4 MHz, and M is a positive integer.

18. The method according to any one of claims 11 to 17, wherein the average energy in the first burst interval is lower than the average energy in the second burst interval, and the value of the p^{th} bit is a binary 0.

19. The method according to claim 18, wherein the second burst interval comprises W pulses, a pulse repetition frequency of transmitting the W pulses is an integer multiple of 62.4 MHz, and W is a positive integer.

20. The method according to any one of claims 11 to 19, wherein a time length of the first burst interval is equal to a time length of the second burst interval.

21. A communication apparatus, comprising a processor, wherein the processor is configured to enable, by executing a computer program or instructions or via a logic circuit, the communication apparatus to perform the method according to any one of claims 1 to 20.

22. The communication apparatus according to claim 21, wherein the communication apparatus further comprises a memory, and the memory is configured to store the computer program or the instructions.

23. The communication apparatus according to claim 21 or 22, wherein the communication apparatus further comprises a communication interface, and the communication interface is configured to input and/or output a signal.

24. A communication apparatus, comprising a logic circuit and an input/output interface, wherein the input/output interface is configured to input and/or output a signal, and the logic circuit is configured to perform the method according to any one of claims 1 to 20.

25. A computer-readable storage medium, wherein the computer-readable storage medium stores a computer program or instructions, and when the computer program or the instructions are run on a computer, the method according to any one of claims 1 to 20 is performed.

26. A computer program product, comprising instructions, wherein when the instructions are run on a computer, the method according to any one of claims 1 to 20 is performed.
